(19) Europäisches Patentamt
European Patent Office
Office européen des brevets

(11) Publication number: **0 004 752**
**B1**

(12) **EUROPEAN PATENT SPECIFICATION**

(45) Date of publication of patent specification: **25.01.84**

(51) Int. Cl.³: **C 08 F 8/00,**
C 08 F 210/00, H 01 B 3/44

(21) Application number: **79300521.6**

(22) Date of filing: **30.03.79**

(54) **A water curable silane modified alkylene alkylacrylate copolymer, a process for its production and products made therefrom.**

(30) Priority: **31.03.78 US 892153**

(43) Date of publication of application:
**17.10.79 Bulletin 79/21**

(45) Publication of the grant of the patent:
**25.01.84 Bulletin 84/4**

(84) Designated Contracting States:
**DE FR GB IT NL SE**

(56) References cited:
**BE - A - 707 365**
**US - A - 3 408 420**

(73) Proprietor: **UNION CARBIDE CORPORATION**
**Old Ridgebury Road**
**Danbury Connecticut 06817 (US)**

(72) Inventor: **Keogh, Michael John**
**13 Jeffrey Lane**
**Bridgwater New Jersey (US)**

(74) Representative: **Baverstock, Michael George Douglas et al,**
**BOULT, WADE & TENNANT 27 Furnival Street**
**London, EC4A 1PQ (GB)**

**EP 0 004 752 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

A water curable silane modified alkylene alkylacrylate copolymer, a process for its production and products made therefrom

This invention is directed to olefinic copolymers containing alkylene units, alkylacrylate units and pendant hydrolyzable silane groups. Also, this invention relates to a process for preparing a water curable silane modified alkylene alkylacrylate copolymer, and cured copolymers prepared therefrom. Additionally, this invention relates to an electrical wire or cable insulated with a water-curable silane modified alkylene alkylacrylate copolymer, and to other manufactured products containing the copolymer of the invention.

It is known to vulcanize polyolefins to extend their service temperature above the melting point of the resin. In areas such as wire and cable, continuous chemical and radiation vulcanization processes are well known. Predominant commercial processes involve a peroxide induced free radical cross-linking reaction. The process steps of coating wire and cable with a peroxide curable coating involve a continuous extrusion of the curable polyolefin composition onto the wire or cable followed by high pressure steam contact (1.74—2.08 MPa (250—300 psi) pressure) to initiate peroxide decomposition and rapid vulcanization of the polyolefin composition. When a radiation curable polyolefin coating composition is used to coat a wire or cable, the same procedure is used as that for peroxide curing except that an electron beam is used as the energy source for vulcanization.

However, both the peroxide and radiation curable systems have serious shortcomings, including high capital investment and high energy utilization. Also, when peroxide curing is used, the coating tends to be difficult to carry out since it requires critical control of the process. If the process is carried too far, the polyolefin may cross-link and solidify in the process equipment (scorching). This requires time consuming delays in removing the cross-linked product from the equipment and costly losses of material.

U.S. Patent 3,646,155 issued February 29, 1972, describes a free radical grafting reaction of an unsaturated organosilane onto a polyolefin polymer backbone, i.e., polyethylene or copolymers of ethylene with less than 50 percent of propylene and/or butylene. The resultant thermoplastic material retains normal extrusion processability thereby permitting fabrication or shaping for end-use applications. After the grafting reaction, vulcanization is accomplished by contact with water. Elevated temperatures (80—100°C) and a silanol condensation catalyst are used to accelerate the vulcanization.

The reactions may be depicted as follows:

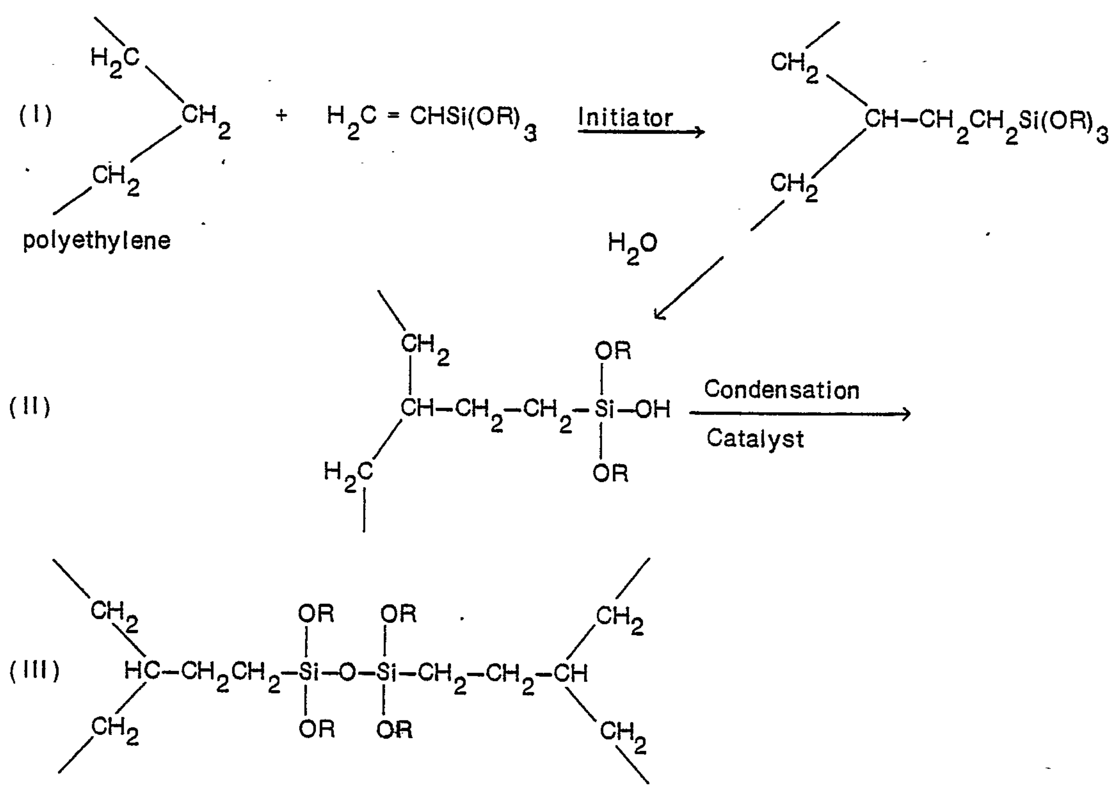


However, the peroxide initiator used in reaction (I) may be reactive toward, and can prematurely cure the polyethylene, i.e., scorch the polyethylene. This results in difficulties in processing for end use applications.

The Applicants are also aware of the disclosure of United States Patent No. 3408420 wherein the product of Example 12 contains, as well as ethylene units, ($-CH_2-CH_2-$) and ethyl acrylate units

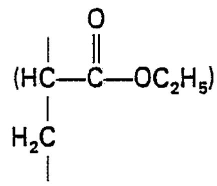

units of the formula

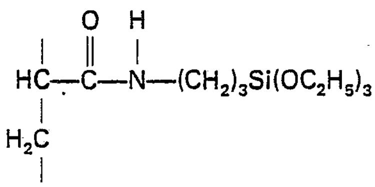

derived by reaction of the acrylic acid chloride units with gamma-amino-propyltriethoxy silane.

A facile process for preparing water-curable silane modified alkylene alkylacrylate copolymers by reacting alkylene alkylacrylate copolymer with a silane in the presence of an organo titanate catalyst, has now been developed.

An object of the present invention is to provide a process for preparing a water-curable silane modified alkylene alkylacrylate copolymer free of undesirable side reactions, such as scorching.

Another object of the present invention is to provide a process for curing a silane modified alkylene alkylacrylate copolymer.

A further object of the present invention is to provide an olefinic copolymer containing alkylene units, alkylacrylate units and pendant hydrolyzable silane groups.

A further object of the present invention is to provide insulation for electrical wire and cable based on a water-curable alkylene alkylacrylate copolymer.

A further object of the present invention is to provide a pipe extruded from a silane modified alkylene alkylacrylate copolymer.

A further object of the present invention is to provide silane modified alkylene alkylacrylate copolymers suitable for molding applications, coatings, adhesives and film.

It has now been found that a water-curable silane modified alkylene alkylacrylate copolymer can be prepared by reacting alkylene alkylacrylate copolymer with a silane in the presence of an organo titanate catalyst. The alkylene alkyacrylate copolymer thus produced can be cured with moisture/water and optionally, cured with moisture/water in the presence of a silanol condensation catalyst.

Additionally, olefinic copolymers containing alkylene units, alkylacrylate units and a pendant hydrolyzable silane group, as hereinafter described, are provided.

Thus, according to the present invention there is provided a process for preparing a water-curable silane modified alkylene alkylacrylate copolymer which process comprises reacting an alkylene alkylacrylate copolymer with a silane having the following formula:

$$X{+}CH_2{)}_a SiY_3$$

wherein X is SH, $NH_2$ or

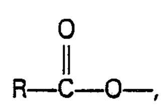

wherein R therein is

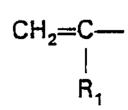

or $C_1$ to $C_{18}$ alkyl; $R_1$ is hydrogen or $C_1$ to $C_{18}$ alkyl; a is an integer of 1 to 18; Y is independently hydrogen, a hydrocarbon radical of 1 to 18 carbon atoms, $C_1$ to $C_{18}$ alkoxy, or $-O{+}CH_2{)}_a O{+}CH_2{)}_a H$, with the proviso that at least one of Y is other than hydrogen or hydrocarbon, said reaction being carried out at a temperature of from 25°C up to the volatility temperature of the silane, in the presence of a catalytic amount of organo titanate catalyst.

The invention also provides a silane modified alkylene alkylacrylate copolymer comprising: alpha olefin units having the formula:

I. 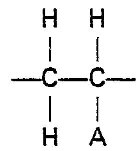

wherein A is hydrogen or an alkyl radical of 1 to 16 carbon atoms, said alpha olefin units being present in said copolymer to the extent of at least 50 weight percent at least 0.1 weight percent polymerized units containing the radical of the formula:

II. 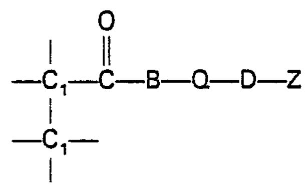

wherein $C_1$ is a carbon atom in the main polymer chain; B is a radical selected from —O—, —S—; Q is $—(CH_2)_a—$ wherein a is an integer from 1 to 18; D is a silicon-containing radical of the formula:

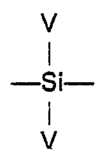

wherein V is selected from hydrogen and hydrocarbon radicals of 1 to 18 carbon atoms, and a hydrolyzable group; Z is a hydrolyzable group; and polymerized units having the formula:

III. 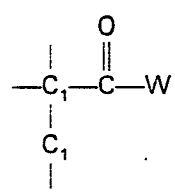

wherein $C_1$ is a carbon atom in the main polymer chain and W is an alkoxy radical of 1 to 18 carbon atoms.

These silane modified alkylene alkylacrylate copolymers are suitable for use in films, as insulation for electrical wire and cable, as coatings and adhesives, for molding applications, and for extrusion applications, such as pipe for holding or transmitting water, particularly hot water pipe.

1. *The Alkylene Alkylacrylate Copolymer*

The copolymers used in the present invention comprise units corresponding to an alkylene group and an alkyl ester of an acrylic acid. By alkyl acrylic ester for the purpose of this invention, is meant an alkyl ester of an acrylic acid, as defined in Acrylic Resins, by Milton B. Born, p. 15f., under the subtitle "Monomer Chemistry", whereunder alkyl esters of both unsubstituted acrylic acid

$$(CH_2{=}CH—COOH)$$

and simple alpha substituted acrylic acids such as those acrylic acids having a lower alkyl substituent, e.g., methacrylic acid

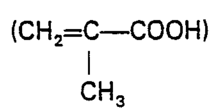

are included. Specific acrylic esters suitable for formulation of the copolymers include such as the methyl, ethyl, propyl, isopropyl, butyl, isobutyl, t-butyl, hexyl, 2-ethyl-hexyl, decyl, lauryl, and stearyl esters of acrylic or methacrylic acids. It will be obvious to those skilled in the art that the alkyl portion of the alkyl acrylate may also have, if desired, certain simple substituents which do not substantially

interfere with the formation of the copolymers nor detract from their desirable properties. Presently, the preferred alkyl esters are the lower alkyl esters of simple acrylic acids, for example, methyl, ethyl and butyl acrylates and methacrylates.

The alkylene group of the alkylene alkylacrylate copolymer preferably contains 2 to 18 carbon atoms; more preferably 2 to 3 carbon atoms.

The preferred copolymer is ethylene ethylacrylate copolymer containing from about 1 to about 30 percent by weight ethylacrylate. The most preferred copolymer is ethylene ethylacrylate copolymer containing from 2 to about 20 percent by weight ethylacrylate.

The alkylene alkylacrylate copolymers generally have a density (ASTM 1505 test procedure with conditioning as in ASTM D—148—72) of about 0.92 to 0.94 and a melt index (ASTM D—1238 at 0.303MPa (44 psi) tested pressure) of about 0.5 to 500 decigrams per minute.

2. *The Silanes*

The silanes used to form the water-curable silane modified alkylene alkylacrylate copolymer are characterised by the following formula:

$$X-(CH_2)_a-SiY_3$$

wherein X is SH, $NH_2$ or

$$R-\overset{O}{\overset{\|}{C}}-O-,$$

wherein R therein is

$$CH_2=\underset{R_1}{\underset{|}{C}}-$$

or $C_1$ to $C_{18}$ alkyl; $R_1$ is hydrogen or $C_1$ to $C_{18}$ alkyl; a is an integer of 1 to 18; Y is independently hydrogen, a hydrocarbon radical of 1 to 18 carbon atoms, $C_1$ to $C_{18}$ alkoxy, or

$$-O(-CH_2)_a-O(-CH_2)_a-H$$

with the proviso that at least one of Y is other than hydrogen or hydrocarbon.

The preferred silanes are of the formula:

$$X-(CH_2)_a-Si(OR_2)_3$$

Wherein X and a are as previously defined, and $R_2$ is $C_1$ to $C_8$ alkyl.

The most preferred silanes include:

$$CH_3\overset{O}{\overset{\|}{C}}-O-CH_2CH_2Si(OCH_3)_3$$

$$CH_3\overset{O}{\overset{\|}{C}}-O-CH_2CH_2Si(OCH_2CH_3)_3$$

$$CH_3\overset{O}{\overset{\|}{C}}-O-CH_2CH_2Si(OC_2H_4OCH_3)_3$$

$$CH_3-\overset{O}{\overset{\|}{C}}-O(CH_2)_3-Si(OCH_3)_3$$

$$CH_3-\overset{O}{\overset{\|}{C}}-O(CH_2)_3-Si(OCH_2CH_3)_3$$

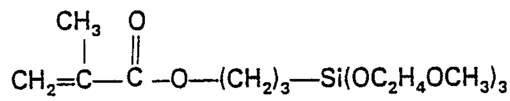

$HS(CH_2)_3—Si(OCH_3)_3$

$NH_2(CH_2)_3—Si(OCH_3)_3$

3. *The Organo Titanate Catalyst*

The organo titanate catalysts used in the present invention are preferably those which are characterized by the following structural formula:—

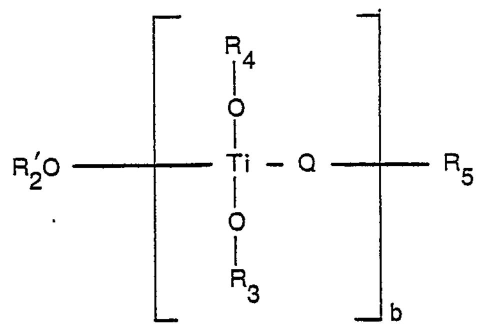

wherein $R_2'$, $R_3$, $R_4$ and $R_5$ are independently selected from hydrogen, alkyl, cycloalkyl, aryl, alkaryl, aralkyl of 1 to 20 carbon atoms, lactyl and acyl of the formula:

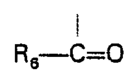

(wherein $R_6$ is alkyl of 1 to 20 carbon atoms); and b is an integer of from 1 to 100. These organo titanates are commercially available materials and are prepared according to the procedures as set forth in U.S. Patent 2,984,641.

The preferred organo titanate catalyst of the formula:

$$Ti(OR_7)_4$$

wherein $R_7$ is independently $C_1$ to $C_{20}$ alkyl, preferably $C_1$ to $C_8$ alkyl.

The most preferred organo titanates are tetrabutyl titanate and tetraisopropyl titanate.

Also, the organo titanate catalyst herein include chelates. These chelates are described in U.S. Patent 2,984,641 and are commercially available. The chelates include tetraoctylene glycol titanium, triethanolamine titanate, titanium acetyl acetonate, and titanium lactate.

These titanates may also be used with co-catalysts which are well known in the art as co-catalysts for esterification reactions. These co-catalysts include transition metal carboxylate salts.

These organo titanates are used in a catalytic amount. A preferred amount of organo titanate is from about 0.10 to about 2.0 weight percent, based on the weight of resin.

4. *Reaction to Prepare Silane Modified Alkylene Alkylacrylate Copolymers*

The reaction of alkylene alkylacrylate copolymer and organo silane compound may be carried out at a temperature of between about 25°C and up to the volatility temperature of the silane. This temperature is preferably between about 140° and 225°C and most preferably, between about 155° and 225°C. However, temperatures higher than the volatility temperature of the silane may be used with increased pressure.

The reaction may be carried out at atmospheric pressure. However, higher pressures may be used.

The reaction may be carried out employing any suitable apparatus. However, the reaction is preferably carried out under conditions in which the copolymer is subjected to mechanical working. The reaction is preferably carried out in Brabender or Banbury mixers, for example.

The copolymer and silane reactants may be brought together by any convenient means. For example, the organo silane may be added to the fluxed copolymer after which the organo titanate catalyst is added or alternatively, the copolymer containing the organo titanate catalyst is reacted with the silane or the organo titanate and silane are first fixed and then added to the fluxed copolymer.

The reaction is preferably carried out in the absence of solvent although organic solvent may be

employed if desired to facilitate the addition of, for example, the organo silane to the reaction.

The reaction of the copolymer and silane may be depicted (with ethylene ethylacrylate copolymer) as follows:

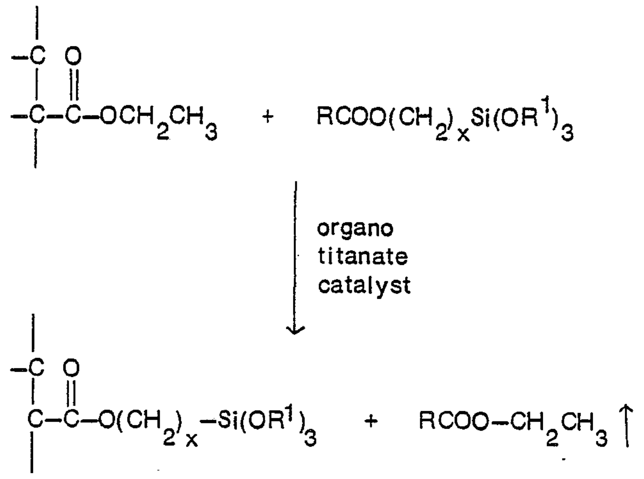


The cross-linking of the silane modified alkylene alkylacrylate copolymer is effected by exposing it to moisture. The moisture present in the atmosphere is usually sufficient to permit cross-linking to occur. However, the rate of cross-linking may be hastened by use of an artificially moistened atmosphere, immersion in water and optionally employing elevated temperatures. Cross-linking may be effected at temperatures of between about 25° and 100°C and preferably, 70°C to 100°C. Also, the silane modified alkylene alkyacrylate copolymer can be exposed to steam at temperatures of 100°C or higher.

The cross-linking reaction may be depicted as follows:

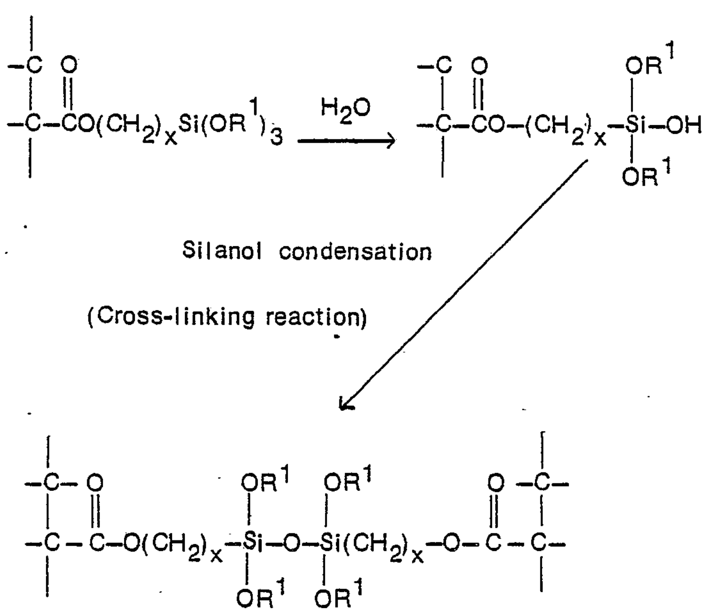


Additionally, the cross-linking may be carried out in the presence of a silanol condensation catalyst. A unique feature of this invention is that the cross-linking reaction can be carried out at significant rates in the absence of added silanol condensation catalyst. The organo titanate catalyst or catalyst residues used in the ester-interchange reaction, supra, also catalyze the cross-linking reaction. The prior art reactions of organo silanes with polyolefins using peroxides or radiation, require catalyst added in a separate step to accomplish significant cross-linking rates.

Alternatively, a wide variety of materials which function as silanol condensation catalysts and which are known in the art may be employed in the process of this invention. Such materials includes, for example, metal carboxylates such as dibutyltin dilaurate, stannous acetate, stannous octoate, lead naphthenate, zinc octoate, iron-2-ethylhexoate and cobalt naphthenate; organic bases such as ethylamine, hexylamine, dibutylamine and piperidine and acids such as mineral acids and fatty acids.

5. *The Silane Modified Alkylene Alkylacrylate Copolymer*

The silano modified alkylene alkylacrylate copolymers of the present invention contain polymerized alpha olefin units having the formula:

I. 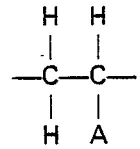

wherein A is hydrogen or an alkyl radical of 1 to 16 carbon atoms, said alpha olefin units being present in said copolymer to the extent of at least 50 weight percent; at least 0.1 weight percent polymerized units containing the radical of the formula:

II. 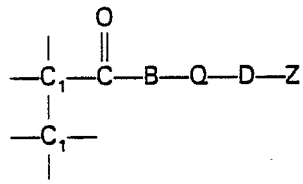

wherein $C_1$ is a carbon atom in the main polymer chain; B is a radical selected from —O—, —S—; Q is $—(CH_2)_a—$ wherein a is an integer from 1 to 18; D is a silicon-containing radical of the formula:

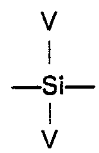

wherein V is selected from hydrogen and hydrocarbon radicals of 1 to 18 carbon atoms, and a hydrolyzable group; Z is a hydrolyzable group; and polymerized units having the formula:

III. 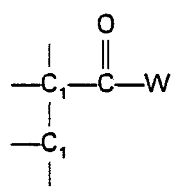

wherein $C_1$ is a carbon atom in the main polymer chain and W is an alkoxy radical of 1 to 18 carbon atoms.

6. *Adjuvants*

Adjuvants such as fillers including carbon black clay, magnesium silicate, e.g. talc, calcium carbonate, silicas, aluminum hydroxide and calcium silicate, may be used with the silane modified alkylene alkylacrylate copolymers in amounts sufficient to produce the intended effect.

7. *Examples*

The following examples are merely illustrative of the present invention and are not intended as a limitation on the scope thereof.

Examples 1 to 10

A Brabender mixer was heated to 160°C and maintained under a blanket of argon and charged with ethylene-ethylacrylate copolymer having a melt index of 4.5 and an ethylacrylate content of 18 percent. The resin was fluxed and an amount of silane, as shown in Table I, was added, and the contents mixed until homogeneity was obtained. Tetraisopropyl titanate catalyst (1.0 weight percent) was slowly added. The contents were heated at 155—160°C for about 15 minutes.

After preparation, the copolymer was blended with 5 weight percent of a 1 weight percent dibutyltin dilaurate resin masterbatch and pressed into plaques and suspended in water for 3 hours at 90°C.

(The masterbatch was prepared as follows: quantity of ethylene vinylacetate copolymer (10 weight percent vinylacetate; 2.0 melt index) was treated with a 25 percent by weight solution of dibutyltin dilaurate in isopropyl alcohol in an amount to produce a 1 weight percent dibutyltin dilaurate resin masterbatch. The solvent was removed in a vacuum oven heated at 40°C for about 12 hours. The

material so produced was stored under argon until use).

The plaques were removed from the water, wiped dry and placed in a vacuum oven at 50°C for 1 hour to remove residual water.

The plaques were then measured for cure according to the Monsanto Rheometer cure test ("Monsanto" is a registered Trade Mark). This test procedure is fully set forth in U.S. Patent 4,018,852 issued April 19, 1977. Briefly, Figure 1 of said patent shows the typical Monsanto Rheometer curve. The cure level (highest cross-linking density) is designated as H. It is measured in terms of mm-Kg and inch-pounds of torque on the rheometer test equipment. A higher value for H corresponds to a higher cross-link density.

Also, the plaques were measured for decalin extractables according to Reference Method A of ASTM D—2765. The decalin soluble portion of the polyethylene compound is a quantitative measure of its degree of cure. The larger the weight percent value, the lower the degree of cure.

The results are set forth in Table I.

TABLE I

| Example | Silane | Amt. of Silane (1) (wt.percent) | mm-kg | Rheometer Torque-Level (H) (in-lbs.) | Decalin Extract-ables (wt.%) |
|---|---|---|---|---|---|
| 1 | $CH_2{=}C(CH_3)COO(CH_2)_3Si(OCH_3)_3$ | 4.4 | 469 | 41 | 25.4 |
| 2 | $CH_3COO(CH_2)_3Si(OCH_3)_3$ | 4.0 | 514 | 45 | 23.1 |
| 3 | $CH_3COO(CH_2)_2Si(OCH_2CH_3)_3$ | 3.7 | 583 | 51 | 20.1 |
| 4 | $CH_3COO(CH_2)_3Si(OCH_3)_3$ | 4.7 | 343 | 30 | 29.8 |
| 5 | $CH_3COO(CH_2)_3Si(OCH_3)_3$ | 3.5 | 34.3 | 3 | 99.9 |
| 6 | $HS(CH_2)_3Si(OCH_3)_3$ | 3.0 | 160 | 14 | 44.8 |
| 7* | 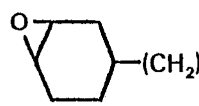 $-(CH_2)_2Si(OCH_3)_3$ | 3.0 | 45.7 | 4 | 99.6(2) |
| 8 | $NH_2(CH_2)_3Si(OC_2H_5)_3$ | 3.0 | 126 | 11 | 43.6(2) |
| 9* | $C_2H_3Si(CH_3COO)_3$ | 3.0 | 34.3 | 3 | No cross-(2) linking |
| 10* | $CH_3CONH(CH_2)_3Si(OCH_3)_3$ | 3.0 | 34.3 | 3 | No cross-(2) linking |

(1) Weight adjusted to mol equivalents

(2) Reaction attempted up to 190°C for 15 minutes.

* Not of the present invention.

Examples 11 to 16

The procedure of Examples 1 to 10 was repeated except that 40 grams of ethylene ethylacrylate copolymer, having a melt index of 2.4 and an ethylacrylate content of 14 percent was used. Also, tetraisopropyl titanate catalyst and methacryloxypropyltrimethoxy silane (in amounts as shown in Table II) were added.

After preparation, the silane modified ethylene ethylacrylate copolymer was pressed into plaques and cured according to the procedure as set forth in Examples 1 to 10. The plaques were measured for cure by the procedure as described in Examples 1 to 10. The result as set forth in Table II.

The data in Table II show the effect of silane concentration on the degree of cure. Increasing the silane charged to the system results in a higher degree of cross-linking.

TABLE II

Effect of Silane Content on Cure Level

| Example | Amount of Silane (wt.%) | Amount of Catalyst (wt.%) | Rheometer Torque (in-lbs.) | (mm-kg) |
|---|---|---|---|---|
| 11* | 2.5 | — | 4.6 | 52.6 |
| 12 | 2.0 | 0.5 | 19.2 | 220 |
| 13 | 2.5 | 0.5 | 32.8 | 375 |
| 14 | 3.0 | 0.5 | 36.2 | 414 |
| 15 | 4.0 | 0.5 | 38.0 | 434 |
| 16 | 5.0 | 0.5 | 45.0 | 514 |

* Not of the present invention.

Examples 17 to 23

The procedure of Examples 11 to 16 was exactly repeated except that 2.5 wt. percent of methacryloxypropyltrimethoxy silane and tetraisopropyl titanate catalyst, in the amounts as shown in Table III, were added. Also, the copolymers so produced were pressed into plaques and cured by the procedure as described in Examples 11 to 16.

The decalin extractables and the cure were measured according to the procedure as described in Examples 1 to 10. The results are set forth in Table III.

The data in Table III show the effect of the catalyst concentration on the reaction. It was found that lower cure values were obtained at higher titanate catalyst concentration.

TABLE III

Effect of Catalyst Concentration on Cure Level

| Example | Catalyst (wt. %) | Rheometer Torque (in-lbs.) | mm-kg | Decalin Extractable (Wt. %) |
|---|---|---|---|---|
| 17* | 0 | 4.6 | 52.6 | 99.5 |
| 18 | 0.20 | 29.0 | 332 | — |
| 19 | 0.32 | 27.0 | 308 | — |
| 20 | 0.5 | 32.8 | 375 | 29.3 |
| 21 | 1.0 | 27.8 | 318 | 35.7 |
| 22 | 1.5 | 21.7 | 248 | 38.9 |
| 23 | 2.0 | 20.3 | 232 | 38.9 |

* Not of the present invention.

Examples 24 to 28

The procedure of Examples 11 to 16 was exactly repeated except that 40 grams of the type of copolymer, containing the percent of ethylacrylate therein as set forth in Table IV was used. Also, 1.0 weight percent of tetraisopropyl titanate catalyst and 2.5 wt. percent of methacryloxypropyltrimethoxy silane were used in the reaction. The copolymer so produced was pressed into plaques and cured by the procedure as described in Examples 1 to 10.

The cure and decalin extractables were measured according to the procedure as described in Examples 1 to 10.

The type of copolymer, percent ethylacrylate content, decalin extractables and cure are set forth in Table IV.

The data in Table IV show that various copolymers are suitable as the base resin in the process of the present invention.

TABLE IV

| Example | Copolymer | %Ethyl-Acrylate | Rheometer Torque (H) (in-lbs.) | mm-kg | Decalin Extract-ables (wt.%) |
|---|---|---|---|---|---|
| 24 | Ethylene ethyl-acrylate | 18 | 34 | 389 | 28.4 |
| 25 | Ethylene ethyl-acrylate | 14 | 29 | 332 | 31.8 |
| 26 | Ethylene ethyl-acrylate | 10.5 | 29 | 332 | 35.1 |
| 27 | Ethylene ethyl-acrylate | 2 | 15.8 | 181 | 38.8 |
| 28 | Ethylene butylacrylate | 10[1] | 26 | 297 | 34.0 |

[1] indicates % of butylacrylate

Example 29

The procedure of Examples 11 to 16 was repeated using 1.0 weight percent tetraisopropyl titanate catalyst and 2.5 weight percent of methacryloxypropyltrimethoxy silane. The reactants were heated for 10 minutes at between 155°—160°C. The reaction was found to be complete in about 10 minutes. Prolonged heating at this temperature did not lower the grafting level of the silane onto the copolymer nor did it lead to scorching if moisture was excluded from the reaction.

Examples 30 to 36

The procedure of Examples 11 to 16 was repeated except that 1.0 percent of tetraisopropyl titanate and 2.5 weight percent methacryloxypropyltrimethoxy silane were used.

The silane modified ethylene ethylacrylate copolymer produced was pressed into plaques and cured according to the procedure as set forth in Examples 1 to 10, for the time (hours) as set forth in Table V.

The cure and decalin extractables were measured according to the procedure as described in Examples 1 to 10. The results are set forth in Table V.

The data in Table V show that the samples are fully cured in a time period of one hour, and longer heating is unnecessary.

TABLE V

| Example | Cure Time Hours | Rheometer Torque (H) (in-lbs.) | mm-kg | Decalin Extractables (wt. %) |
|---|---|---|---|---|
| 30 | 1 | 25.4 | 290 | 39.0 |
| 31 | 2 | 26.0 | 297 | 40.1 |
| 32 | 3 | 28.0 | 320 | 38.2 |
| 33 | 4 | 26.0 | 297 | 38.7 |
| 34 | 5 | 29.2 | 334 | 38.6 |
| 35 | 6 | 30.2 | 345 | 38.1 |
| 36 | 8 | 30.4 | 348 | 37.6 |

Examples 37 to 44

The procedure of Examples 11 to 16 was repeated except that the ethylene ethylacrylate copolymer had a melt index of 4.5 and an ethylacrylate content of 18%. Also 2.5 weight percent of silane, as described in Table VI, and 1 weight percent of tetraisopropyl titanate were used.

After preparation, the copolymer (Examples 37 to 40) was pressed into plaques and cured for 1 and 3 hours, respectively using masterbatch catalyst as described in Examples 1 to 10. The plaques were measured for cure by the procedure as described in Examples 1 to 10.

After preparation of the copolymer of Examples 41 to 44, the copolymer was pressed into plaques without adding catalyst masterbatch, by heating at 90°C for 1 and 3 hours. The cure was measured according to the procedure as described in Examples 1 to 10.

The data of Table VI show that high levels of cross-linking are obtained in the absence of added silanol condensation catalyst.

TABLE VI

| Example | Silane | WITH MASTERBATCH: Rheometer Torque 1 hour in-lbs. | mm-kg | 3 hours in-lbs. | mm-kg | WITHOUT MASTERBATCH: Rheometer Torque 1 hour in-lbs. | mm-kg | 3 hours in-lbs. | mm-kg |
|---|---|---|---|---|---|---|---|---|---|
| 17 | $CH_3COO(CH_2)_3Si(OC_2H_5)_3$ | 19 | 217 | 22 | 252 | — | — | — | — |
| 38 | $CH_3COO(CH_2)_2Si(OCH_3)_3$ | 44 | 503 | 48 | 549 | — | — | — | — |
| 39 | $CH_3COO(CH_2)_3Si(OCH_3)_3$ | 29 | 332 | 37 | 423 | — | — | — | — |
| 40 | $CH_2{=}C(CH_3)COO(CH_2)_3Si(OCH_3)_3$ | 22 | 252 | 32 | 366 | — | — | — | — |
| 41 | $CH_3COO(CH_2)_3Si(OC_2H_5)_3$ | — | — | — | — | 10 | 114 | 15 | 171 |
| 42 | $CH_3COO(CH_2)_2Si(OCH_3)_3$ | — | — | — | — | 40 | 457 | 44 | 503 |
| 43 | $CH_3COO(CH_3)_3Si(OCH_3)_3$ | — | — | — | — | 18 | 206 | 23 | 263 |
| 44 | $CH_2{=}C(CH_3)COO(CH_2)_3Si(OCH)_3$ | — | — | — | — | 18 | 206 | 22.5 | 257 |

Examples 45—46

The procedure of Examples 11 to 16 was repeated except that 40 grams of ethylene ethylacrylate copolymer having a melt index of 4.5 and an ethylacrylate content of 18 percent was used. Also, the amount and type of silane, as described in Table VII, was added. Tetraisopropyl titanate (1.0 weight percent), was used as the catalyst.

After preparation the silane modified ethylene ethylacrylate copolymer was pressed into plaques and cured for 1 and 3 hours, respectively, according to the procedure as set forth in Examples 1 to 10. The cure and decalin extractables were measured according to the procedure as set forth in Examples 1 to 10.

The data show that the triethoxy containing silane exhibits a lower degree of cure than the trimethoxy containing silane under the same conditions.

TABLE VII

Silane Alkoxy Group Effect on Cure Speed

| Example | Silane | | Rheometer Torque (II) | | | | Decalin Extractables (wt.%) | |
|---|---|---|---|---|---|---|---|---|
| | Type | Amt. (wt. %) | 1 hr. cure | | 3 hr. cure | | 1 hr. cure | 3 hr. cure |
| | | | in-lbs | mm-kg | in-lbs | mm-kg | | |
| 45 | $CH_3COO(CH_2)_3Si(OCH_2CH_3)_3$ | 3.5 | 19 | 217 | 22 | 252 | 40 | 37.5 |
| 46 | $CH_3COO(CH_2)_3Si(OCH_3)_3$ | 3.0 | 29 | 232 | 37 | 423 | 31.5 | 25 |

Examples 47 to 49

The procedure of Examples 11 to 16 was repeated except that 40 grams of ethylene ethylacrylate copolymer having a melt index and percent of ethylacrylate as set forth in Table VIII was used. Also, 2.5 weight percent of $CH_3COO(CH_2)_2Si(OCH_3)_3$ silane and 1 weight percent of tetraisopropyl titanate was used.

After preparation, the silane modified ethylacrylate copolymer was pressed into plaques and cured according to the procedure as set forth in Examples 1 to 10. The cure and decalin extractables were measured according to the procedure as set forth in Examples 1 to 10. Also, the following tests were performed on the cured silane modified ethylene ethylacrylate copolymer; tensile strength and elongation, D—638—72, tensile strength and elongation after heat ageing for 1 week in an oven set at 121°C; secant modulus, ASTM—D882—758; dielectric constant and dissipation factor (60 cycles), ASTM—D150—74; deformation at 121° and 175°C, ASTM D—621. The results are set forth in Table VIII.

Also, the silane modified copolymer was extruded onto a No. 14 American Wire Gauge copper wire to give a coating 0.762 mm (30 mils) thick and then immersed in water to cure the coating. The tensile strength and elongation ASTM 412—68, and the tensile strength and elongation after heat ageing for one week in an oven set at 121°C were measured. The results are set forth in Table VIII.

TABLE VIII

| Example | 47 | 48 | 49 |
|---|---|---|---|
| Ethyl acrylate content (%) | 10.5 | 2.0 | 10.5 |
| Melt Index | 2.4 | 2.1 | 2.4 |
| Tensile strength (psi) | 1500(1890)(2) | 1470 | 1770(1530)(2) |
| (MPa) | 10.3(13.0)(2) | 10.1 | 12.2(10.5)(2) |
| Elongation (%) | 240(375)(2) | 280 | 180(150)(2) |
| Tensile strength after heat ageing (psi) | 1090(1380)(2) | 1125 | 1660 |
| (MPa) | 7.5(9.5)(2) | 7.8 | 11.4 |
| Elongation after heat ageing (%) | 280(280)(2) | 220 | 160 |
| Modulus (psi) | 9,140 | 16,900 | 24,200 |
| (MPa) | 63.0 | 116.5 | 166.7 |
| D.C. (60 cycle) | 2.672 | 2.433(2.388)(3) | 2.881 |
| D.F. (60 cycle) | 0.00196 | 0.00142(0.0005)(3) | 0.0124 |
| Rheometer torque (H) (in-lbs) | 19 | 11 | 15 |
| (mm-kg) | 217 | 126 | 171 |
| Decalin extractables (wt. %) | 27.4 | 47.6 | 27.2 |
| Deformation (%) @ 121°C | 40.7 | 61.4 | 44.5 |
| @ 175°C | 39.3 | 63.7 | 44.5 |

(1) Contains 75 weight percent ethylene ethylacrylate copolymer, 24.5 weight percent talc and 0.5 wt. percent Agerite MA heat stabilizer
(2) Measured on wire.
(3) Values measured on base resin as control.

**Claims**

1. A process for preparing a water-curable silane modified alkylene alkylacrylate copolymer which

process comprises reacting an alkylene alkylacrylate copolymer with a silane having the following formula:

$$X\text{-}(CH_2)_a\text{-}SiY_3$$

wherein X is SH, $NH_2$ or

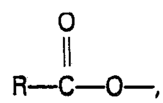

wherein R therein is

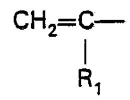

or $C_1$ to $C_{18}$ alkyl; $R_1$ is hydrogen or $C_1$ to $C_{18}$ alkyl; a is an integer of 1 to 18; Y is independently hydrogen, a hydrocarbon radical of 1 to 18 carbon atoms, $C_1$ to $C_{18}$ alkoxy, or $—O—(CH_2)_a—O—(CH_2)_a—H$, with the proviso that at least one of Y is other than hydrogen or hydrocarbon, said reaction being carried out at a temperature of from 25°C up to the volatility temperature of the silane, in the presence of a catalytic amount of organo titanate catalyst.

2. A process as claimed in claim 1 wherein the alkylene alkylacrylate copolymer is $C_2$ to $C_3$ alkylene alkylacrylate copolymer.

3. A process as claimed in claim 2 wherein the alkylene alkylacrylate copolymer is ethylene ethyl acrylate copolymer.

4. A process as claimed in any one of the preceding claims wherein the silane is of the following formula:

$$X\text{-}(CH_2)_a\text{-}Si(OR_2)_3$$

wherein X and a are as defined in claim 1, and $R_2$ is $C_1$ to $C_8$ alkyl.

5. A process as claimed in claim 3 or claim 4 wherein the temperature is from 140° to 225°C.

6. A process as claimed in claim 5 wherein the temperature is from 155° to 225°C.

7. A process as claimed in any one of claims 3 to 6 wherein the organotitanate catalyst is of the formula:

$$Ti(OR_7)_4$$

wherein $R_7$ is independently $C_1$ to $C_{20}$ alkyl.

8. A process as claimed in claim 7 wherein $R_7$ is independently $C_1$ to $C_8$ alkyl.

9. A process as claimed in claim 8 wherein the organotitanate catalyst is tetraisopropyl titanate.

10. A process as claimed in any one of the preceding claims wherein the water-curable silane modified alkylene alkylacrylate copolymer produced is thereafter exposed to moisture.

11. A process as claimed in claim 10 wherein the copolymer produced is exposed to moisture in the presence of a silanol condensation catalyst.

12. A silane-modified alkylene alkylacrylate copolymer comprising: alpha olefin units having the formula:

I.

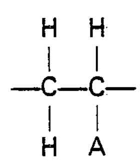

wherein A is hydrogen or an alkyl radical of 1 to 16 carbon atoms, said alpha olefin units being present in said copolymer to the extent of at least 50 weight percent; at least 0.1 weight percent polymerized units containing the radical of the formula:

II. 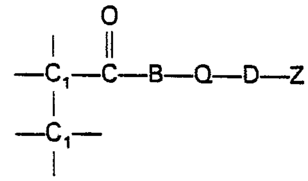

wherein $C_1$ is a carbon atom in the main polymer chain; B is a radical selected from —O—, —S—; Q is $-(CH_2)_a-$ wherein a is an integer of from 1 to 18; D is a silicon-containing radical of the formula:

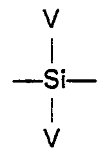

wherein V is selected from hydrogen and hydrocarbon radicals of 1 to 18 carbon atoms, and a hydrolyzable group; Z is a hydrolyzable group; and polymerized units having the formula:

III. 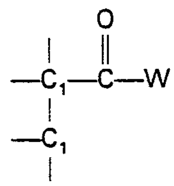

wherein $C_1$ is a carbon atom in the main polymer chain and W is an alkoxy radical of 1 to 18 carbon atoms.

13. Electrical wire or cable when insulated with a water-curable silane modified alkylene alkylacrylate copolymer as claimed in claim 12.

14. A pipe when extruded from a silane modified alkylene alkylacrylate copolymer as claimed in claim 12.

15. A moulding, coating, adhesive or film when made from a silane modified alkylene alkylacrylate copolymer as claimed in claim 12.

**Patentansprüche:**

1. Ein Verfahren zur Herstellung eines wasser-härtbaren, Silan-modifizierten Alkylen-Alkylacrylat-Copolymeren, welches die Umsetzung eines Alkylen-Alkylacrylat-Copolymeren mit einem Silan der folgenden Formel

$$X-(CH_2)_a-SiY_3$$

umfaßt, wobei X SH, $NH_2$ oder

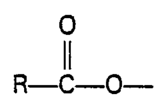

ist, worin R

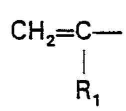

oder $C_1$ bis $C_{18}$-Alkyl bedeutet; $R_1$ steht dabei für Wasserstoff oder $C_1$- bis $C_{18}$-Alkyl; wobei ferner a eine ganze Zahl von 1 bis 18 und Y unabhängig voneinander Wasserstoff, eine Kohlenwasserstoffgruppe mit 1 bis 18 Kohlenstoffatomen, $C_1$- bis $C_{18}$-Alkoxy oder

$$-O-(CH_2)_a-O-(CH_2)_a-H$$

sind, unter der Voraussetzung, daß wenigstens ein Y von Wasserstoff oder Kohlenwasserstoff verschieden ist; die Reaktion wird bei Temperaturen von 25°C bis zur Verdampfungstemperatur des Silans in Anwesenheit einer katalytischen Menge eines Organotitanat-Katalysators durchgeführt.

2. Ein Verfahren nach Anspruch 1, wobei das Alkylen-Alkylacrylat-Copolymer ein $C_2$- bis $C_3$-Alkylen-Alkylacrylat-Copolymer ist.

3. Ein Verfahren nach Anspruch 2, wobei das Alkylen-Alkylacrylat-Copolymer ein Ethylen-Ethylacrylat-Copolymer ist.

4. Ein Verfahren gemäß eines der vorangehenden Ansprüche, wobei das Silan die folgende Formel hat:

$$X-(CH_2)_a-Si(OR_2)_3$$

wobei X und a wie in Anspruch 1 definiert sind und $R_2$ $C_1$- bis $C_8$-Alkyl ist.

5. Ein Verfahren nach Anspruch 3 oder Anspruch 4, wobei die Temperatur 140° bis 225°C beträgt.

6. Ein Verfahren nach Anspruch 5, wobei die Temperatur 155° bis 225°C beträgt.

7. Ein Verfahren gemäß eines der Ansprüche 3 bis 6, wobei der Organotitanat-Katalysator die Formel

$$Ti(OR_7)_4$$

hat, wobei $R_7$ unabhängig voneinander $C_1$ bis $C_{20}$-Alkyl sind.

8. Ein Verfahren nach Anspruch 7, wobei $R_7$ unabhängig voneinander $C_1$ bis $C_8$-Alkyl sind.

9. Ein Verfahren nach Anspruch 8, wobei der Organotitanat-Katalysator Tetraisopropyl-Titanat ist.

10. Ein Verfahren nach einem der vorangehenden Ansprüche, wobei das hergestellte Wasserhärtbare, Silan-modifizierte Alkylen-Alkylacrylat-Copolymer nachher Feuchtigkeit ausgesetzt wird.

11. Ein Verfahren nach Anspruch 10, wobei das hergestellte Copolymer in Anwesenheit eines Silanol-Kondensierungs-Katalysators der Feuchtigkeit ausgesetzt wird.

12. Ein Silan-modifiziertes Alkylen-Alkylacrylat-Copolymer bestehend aus:
alpha-Olefin-Einheiten der Formel

I. 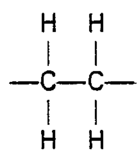

worin A Wasserstoff oder eine Alkylgruppe mit 1 bis 16 Kohlenstoffatomen darstellt und diese alpha-Olefin-Einheiten in dem Copolymeren zu mindestens 50 Gewichtsprozent vorhanden sind; wenigstens 0.1 Gewichtsprozent polymerisierter Einheiten, die die Gruppe der Formel

II. 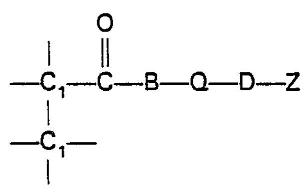

enthalten, worin $C_1$ ein Kohlenstoffatom in der Polymerhauptkette darstellt; B ein O-Atom darstellt; Q für $-(CH_2)_a-$ steht, wobei a eine ganze Zahl von 1 bis 18 ist; D eine siliziumhaltige Gruppe der Formel

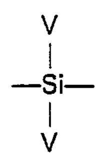

darstellt, wobei V von Wasserstoff und Kohlenwasserstoffgruppen mit 1 bis 18 Kohlenstoffatomen und einer hydrolisierbaren Gruppe ausgewählt wird; Z eine hydrolysierbare Gruppe ist; und polymerisierte Einheiten der Formel

III. 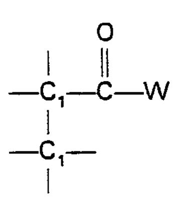

worin $C_1$ ein Kohlenstoffatom in der Polymerhauptkette und W eine Alkoxygruppe mit 1 bis 18 Kohlenstoffatomen darstellt.

13. Ein elektrischer Draht oder Kabel, isoliert mit einem Wasser-härtbaren, Silan-modifizierten Alkylen-Alkylacrylat-Copolymeren nach Anspruch 12.

14. Ein Rohr, stranggepreßt aus einem Silan-modifizierten Alkylen-Alkylacrylat-Copolymeren nach Anspruch 12.

15. Ein Formkörper, Überzug, Klebstoff oder Film, hergestellt aus einem Silan-modifizierten Alkylen-Alkylacrylat-Copolymeren nach Anspruch 12.

## Revendications

1. Procédé de production d'un copolymère alkylène-acrylate d'alkyle modifié par un silane durcissant à l'eau, procédé qui consiste à faire réagir un copolymère d'alkylène et d'acrylate d'alkyle avec un silane répondant à la formule suivante:

$$X\text{-}(CH_2)_a\text{-}SiY_3$$

dans laquelle X représente SH, $NH_2$ ou

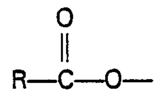

où R est un groupe

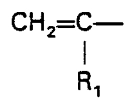

ou un groupe alkyle en $C_1$ à $C_{18}$; $R_1$ est l'hydrogène ou un groupe alkyle en $C_1$ à $C_{18}$; *a* est un nombre entier de 1 à 18; Y représente, indépendamment, l'hydrogène, un radical hydrocarboné ayant 1 à 18 atomes de carbone, un radical alkoxy en $C_1$ à $C_{18}$ ou un radical $-O(CH_2)_a-O-(CH_2)_a-H$, sous réserve qu'au moins l'un des groupes Y représente autre chose que l'hydrogène ou un groupe hydrocarboné, ladite réaction étant conduite à une température allant de 25°C à la température de volatilité du silane, en présence d'une quantité catalytique d'un catalyseur à base d'un titanate organique.

2. Procédé suivant la revendication 1, dans lequel le copolymère alkylène-acrylate d'alkyle est un copolymère d'alkylène en $C_2$ ou $C_3$ et d'un acrylate d'alkyle.

3. Procédé suivant la revendication 2, dans lequel le copolymère d'alkylène et d'acrylate d'alkyle est un copolymère d'éthylène et d'acrylate d'éthyle.

4. Procédé suivant l'une quelconque des revendications précédentes, dans lequel le silane répond à la formule suivante:

$$X\text{-}(CH_2)_a\text{-}Si(OR_2)_3$$

dans laquelle X et *a* ont les définitions données dans la revendication 1 et $R_2$ est un groupe alkyle en $C_1$ à $C_8$.

5. Procédé suivant la revendication 3 ou la revendication 4, dans lequel la températur va de 140 à 225°C.

6. Procédé suivant la revendication 5, dans lequel la température va de 155 à 225°C.

7. Procédé suivant l'une quelconque des revendications 3 à 6, dans lequel le catalyseur à base de titanate organique répond à la formule:

$$Ti(OR_7)_4$$

dans laquelle les groupes $R_7$ représentent, indépendamment, des groupes alkyle en $C_1$ à $C_{20}$.

8. Procédé suivant la revendication 7, dans lequel les groupes $R_7$ représentent, indépendamment, un groupe alkyle en $C_1$ à $C_8$.

9. Procédé suivant la revendication 8, dans lequel le titanate organique utilisé comme catalyseur est le titanate de tétra-isopropyle.

10. Procédé suivant l'une quelconque des revendications précédentes, dans lequel le copolymère alkylène-acrylate d'alkyle modifié par un silane durcissant à l'eau qui est produit est exposé ensuite à l'humidité.

11. Procédé suivant la revendication 10, dans lequel le copolymère produit est exposé à l'humidité en présence d'un catalyseur de condensation du type d'un silanol.

12. Copolymère alkylène-acrylate d'alkyle modifié par un silane, comprenant: des motifs alpha-oléfiniques répondant à la formule:

I. 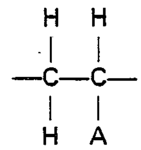

dans laquelle A est l'hydrogène ou un radical alkyle ayant 1 à 16 atomes de carbone, lesdits motifs alpha-oléfiniques étant présents dans ledit copolymère en proportion d'au moins 50% en poids; au moins 0,1% en poids de motifs polymérisés contenant le radical de formule:

II. 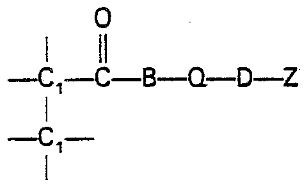

dans laquelle $C_1$ est un atome de carbone de la chaîne principale du polymère; B est un radical choisi entre —O— et —S—; Q est un groupe $—(CH_2)_a—$ dans lequel *a* est un nombre entier de 1 à 18; D est un radical contenant du silicium, de formule:

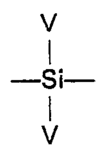

où V est choisi entre l'hydrogène et des radicaux hydrocarbonés ayant 1 à 18 atomes de carbone, et un groupe hydrolysable; Z est un groupe hydrolysable; et des motifs polymérisés répondant à la formula:

III. 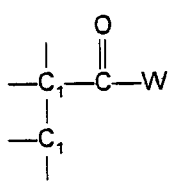

dans laquelle $C_1$ est un atome de carbone de la chaîne principale du polymère et W est un radical alkoxy ayant 1 à 18 atomes de carbone.

13. Fil ou câble électrique isolé avec un copolymère alkylène-acrylate d'alkyle modifié par un silane durcissant à l'eau suivant la revendication 12.

14. Tuyau formé par extrusion d'un copolymère alkylène-acrylate d'alkyle modifié par un silane suivant la revendication 12.

15. Pièce moulée, revêtement, adhésif ou film réalisé à partir d'un copolymère alkylène-acrylate d'alkyle modifié par un silane suivant la revendication 12.